# EUROPEAN PATENT SPECIFICATION

(11) **EP 3 141 166 B1**
(45) Date of publication and mention of the grant of the patent: **27.11.2019**
(21) Application number: 15852307.6
(22) Date of filing: 21.04.2015
(51) Int. Cl.: A47J 31/44, A47J 31/36

(54) **BEVERAGE BREWING DEVICE ALLOWING BEVERAGE CAPSULE TO BE REMOVED EASILY**
GETRÄNKEBRAUVORRICHTUNG MIT LEICHT ZU ENTFERNENDER GETRÄNKEKAPSEL
DISPOSITIF D'INFUSION DE BOISSON PERMETTANT LE RETRAIT FACILE D'UNE CAPSULE DE BOISSON

(30) Priority: 22.10.2014 CN 201410568612
(43) Date of publication of application: 15.03.2017
(73) Proprietor: Ningbo Quanjing Electric Technology Co. Ltd., Zhejiang 315324 (CN)
(72) Inventor: JING, Yudong, Cixi Zhejiang 315324 (CN); FENG, Shuzhou, Cixi Zhejiang 315324 (CN)
(74) Representative: Orr, Robert
(86) International application number: PCT/CN2015/000280
(87) International publication number: WO 2016/061900

(56) References cited:
- EP-A1- 1 721 553
- EP-A1- 2 415 375
- EP-A2- 1 980 183
- WO-A1-2010/081311
- CN-A- 102 551 540
- CN-A- 102 599 817
- CN-A- 104 433 814
- CN-U- 201 894 557
- CN-U- 201 894 557
- CN-U- 202 112 913
- CN-U- 202 112 913
- CN-U- 203 852 217
- CN-U- 204 232 924

## Description

### Field of the Invention

The present invention relates to a beverage brewing device with easy rejection of a beverage capsule, which is suitable for processing the beverage capsule (also called capsule) having ingredients packaged therein, by which beverage or edible liquid can be produced by interaction between the ingredients and liquid such as hot pressurized water introduced into the capsule. The beverage brewing device mainly refers to a coffeemaker.

### Description of the Prior Art

As one type of beverage brewing devices, a coffeemaker mainly has two beverage brewing directions, i.e., horizontal and vertical directions. A coffeemaker of brewing in the horizontal direction mainly includes a first frame and a second frame, wherein the first frame is fixed inside a front end of a housing, while the second frame is provided inside a rear end of the housing and can move forward and backward relative to the first frame, and both the frames are air-tightly enclosed to form an enclosed brewing chamber for accommodating a coffee capsule after the second frame moves to and contacts with the first frame. To be convenient for operation, the existing coffeemakers generally have a function of automatic capsule rejection. A concave chamber, configured to accommodate the capsule, of the coffeemaker of brewing in the horizontal direction is generally provided on the second frame, and the first frame is a plate having a function of capsule expansion.

The coffeemaker of brewing in the horizontal direction has many capsule rejection ways, for example, a Chinese Invention Patent CN100589741C (Patent No.: ZL200810162200.1), titled Capsule Automatically Rejecting Mechanism of Coffeemaker, disclosed a capsule rejection structure, where a push rod, having a front end stretched into the concave chamber, movably passes through and is provided on a rear wall of the concave chamber of the second frame, and a limiting member fitted with the push rod is provided inside a rear portion of the housing; and the limiting member limits the push rod to eject the coffee capsule located inside the concave chamber when the second frame moves backward relative to the first frame.

For example, a Chinese Invention Patent CN102551540A (Application No.: CN201110449327.3), titled Capsule Delivery And Rejection Structure of Beverage Brewing Device, disclosed another capsule rejection structure, where jaws, each having a front end extended to the front of a front end face of the second frame to form a clamp for clamping the capsule, are respectively located on two sides of the second frame; the front ends of the jaws are driven by the second frame to complete one opening and closing relatively to the second frame when the second frame moves forward and backward. A capsule baffle, which is located between the corresponding jaw and the second frame, is provided on left and right sides of the front end of the second frame respectively, and the front ends of the jaws are extended to the front of the front end face of the second frame to form a stopping portion which may come into contact with a circular edge of the capsule; in a state in which the first frame and the second frame are closed, the stopping portion on the capsule baffle comes into contact with the circular edge of the capsule; and in a state in which the second frame moves to a middle position, the stopping portion on the capsule baffle forces the circular edge of the capsule to enable at least half of the capsule to be exposed out from a chamber.

The above capsule rejection structures both have the defects of many involved components, complicated relative position relationship and cooperative relationship, high requirement on assembly precision, inconvenient assembly and the like.

For example, a Chinese Invention Patent CN100589741C (Patent No.: ZL200810162200.1), titled Capsule Delivery and Rejection Structure of Beverage Brewing Device, disclosed a third capsule rejection structure. By limiting by a guide structure and supporting by a support plate, this capsule rejection structure puts the capsule in the front of the concave chamber; during brewing, the second frame moves forward to force the capsule to enter into the concave chamber gradually, the guide structure is driven by the second frame to open; at the same time, the circular edge of the capsule enters into a position between a capsule scraping hook and the front end face of the first frame, and the capsule scraping hook hooks the circular edge of the capsule; and when the first frame and the second frame are air-tightly enclosed, the support plate is resisted against the first frame to retract into the concave chamber, so that the brewing for the beverage may be performed; at the end of brewing the beverage, the second frame moves backward, since the circular edge of the capsule is hooked by the capsule scraping hook, the capsule will not move backward along with the second frame; and when the second frame moves backward to an initial position, the bottom of the capsule will not be supported by the support plate, so that the capsule will automatically drop from a dropping port of the housing under its own gravity.

Compared with the above two structures, the third capsule rejection structure is relatively simple but still has a lot of components. Moreover, the involved guide structure is also a dynamic structure while the completion of capsule rejection is also aided by the capsule scraping hook, so the structure is still more complicated. In addition, the capsule scraping hook may be deformed by its own elasticity under the compression of the coffee capsule; as time passes, the capsule scraping hook will be fatigued, resulting in not smooth deformation, and even the possibility of fracture. Furthermore, the above capsule pushing structures complete the capsule rejection all by the gravity of the capsule, but the capsule is probably adsorbed on the end face of the first frame at the end of extraction of the coffeemaker, resulting in not smooth capsule rejection.

Chinese Utility Model CN202112913U discloses a capsule ejection apparatus of a capsule coffee machine comprising a water seat and a brewing seat which perform opening and closing movements mutually along a straight line through a driving mechanism. The water seat is provided with a brewage cavity for receiving a coffee capsule. One flanged side of the coffee capsule is directed to the brewing seat, which is provided with a seal ring used for sealing the coffee capsule and a push rod capable of separating the coffee capsule from the seal ring. The front side of the brewing seat is provided with a support component. The push rod is disposed before the seal ring in a vertically sliding manner through the support assembly. The upper portion of the push rod is provided with a limiting projection capable of limiting a maximum downward sliding distance of the push rod. The lower portion of the push rod is provided with a slant tongue corresponding to the flange of the coffee capsule. The push rod is capable of ejecting the coffee capsule downward under the action of a spring.

International Patent Publication WO2010/081311 discloses a coffee capsule machine comprising a brewing apparatus. The brewing apparatus includes an infusing water body assembly, a discharging water body assembly, a drive mechanism driving the linear movement of the discharging water body assembly, a brewing chamber enclosing coffee capsules, and a rod. A track groove is disposed on the infusing water body assembly. The driven element of the drive mechanism is connected with the discharging water body assembly. One end of the brewing chamber is connected with the discharging water body assembly via a connecting pivot. One end of the rod is connected with the brewing chamber. A location piece is disposed on the rod and located in the track groove disposed on the infusing water body assembly. A coffee capsule that has been separated from the brewing chamber is dropped by gravity and the action of a sprung top rod.

### Summary of the Invention

In view of the current situation in the prior art, a technical problem to be solved by the present invention is to provide a beverage brewing device, which has a simpler and more rational structure and rejects capsule more smoothly.

To solve the technical problem, the beverage brewing device with easy rejection of a capsule comprises: a housing having a loading port and a dropping port;
a first frame positioned inside a front portion of the housing;
a second frame disposed inside a back portion of the housing and being movable forward and backward relative to the first frame, the second frame having a concave chamber for holding a capsule with a circular edge disposed at a front portion of the capsule;
a holding mechanism, for receiving and holding the capsule after the capsule inserted between the first frame and the second frame;
characterized in that, further comprises:
a stopping capsule plate positioned inside the housing and capable of being movable upward and downward, having a stopping portion extending backward to the upper and the rear of a rear surface of the first frame, and a spacing for receiving the circular edge of the capsule, being formed between the stopping portion and the rear surface of the first frame; and
an elastic mechanism, acting on the stopping capsule plate and keeping the stopping capsule plate in a tendency of moving downward;
in the process of the second frame moving forward, the second frame can drive the capsule to release from the holding mechanism and to move forward along with the second frame; in addition, the circular edge of the capsule can be resisted against a rear end face of the stopping portion to force the stopping capsule plate to move forward overcoming the elastic mechanism; when the first frame and the second frame are closed with each other, the circular edge of the capsule enters into the spacing; in the process of the second frame moving backward, the circular edge of the capsule is stopped by a front end face of the stopping portion and finally drops under the action of gravity.

Preferably, the stopping portion of the stopping capsule plate has a certain width and is arc-shaped, so as to increase the contact area between the front end face of the stopping portion and the circular edge of the capsule. The increase of the contact area can enable the stopping portion to hook the circular edge of the capsule better and can limit the retreat of the capsule more effectively, thereby ensuring the dropping of the capsule.

Preferably, the rear end face of the stopping portion is a guiding slope inclined downward from rear to front. Under the action of slop fitting, the circular edge of the capsule can force the stopping capsule plate more smoothly to move upward while overcoming the elastic mechanism.

Preferably, a guiding block protruding forward is provided in the middle of the upper portion of the front end face of the stopping capsule plate, and a guiding notch matching with the guiding block, is formed on the upper portion of the housing, and the guiding block is located inside the guiding notch and can move upward and downward. The fitting of the guide block and the guide notch plays a role of guiding the stopping capsule plate to move up and down.

Preferably, an arc-shaped top face, which can move downward under the action of the elastic mechanism to come into contact with the circular edge of the capsule to force the capsule to move downward, is provided at the upper portion of stopping capsule plate located in the front of the stopping portion. The top face forces the circular edge of the capsule downward under the action of the elastic mechanism to provide an extra capsule rejection force for the capsule, thereby preventing the capsule from being adsorbed on the first frame and ensuring that the capsule rejection is performed smoothly.

Preferably, he elastic mechanism comprises two springs, two supporting portions, two guiding grooves for receiving each supporting portion, a cover plate; each supporting portion protruding outward is respectively provided on the left and right sides of the lower portion of the stopping capsule plate, and can move upward and downward relative to each guiding groove; each guiding groove is respectively formed on the left and right sides of the housing; the cover plate is disposed on the upper portion of the housing and covers the top of the two guiding grooves; and each spring is disposed inside the corresponding guiding groove, each of two ends of the spring resists against the cover plate and the corresponding supporting portion. The elastic mechanism relates to a few components and is convenient in assembly, and moreover, a guiding structure can be formed between the supporting portion and the guiding groove, thereby effectively preventing the stopping capsule plate from shaking during the upward and downward movement and ensuring that the capsule rejection is performed smoothly.

Preferably, the cover plate is U-shaped and has two vertical portions and a horizontal portion, each vertical portion covers the top of each guiding groove; two slots and two barb portions protruding upward are provided on the left and right sides of the top of the housing; the horizontal portion of the cover plate has two jacks for two barb portions to insert into, and each vertical portion is inserted into the slot. The structure forms a detachable fixing mechanism between an end cover and the housing, so that it is convenient for assembly and replacement of the stopping capsule plate.

Preferably, the holding mechanism is two curved surfaces respectively provided on left and right inner walls of the housing for supporting the circular edge of the capsule.

Compared with the prior art, the present invention has the following advantages:
the brewing device mainly realizes the rejection of the capsule under the action of the stopping capsule plate, and has a few components and simple structure;
since the stopping capsule plate is provided on the upper portion of the first frame and moves up and down, the circular edge entering into the rear of the stopping portion is not achieved by deformation of the stopping portion itself but by moving the stopping capsule plate up and down, so that the stopping portion does not have the phenomenon of fatigue fracture, thereby prolonging the service life of the product, and ensuring that the capsule rejection is performed smoothly;
furthermore, in the process of removing the capsule, the stopping capsule plate will move downward to force the circular edge to generate a downward driving force to the capsule, i.e., the dropping force of the capsule is generated by its own gravity and also by elasticity of the elastic mechanism, thereby further ensuring that the capsule is rejected smoothly.

### Brief Description of the Drawings

Fig. 1 is a perspective view of a beverage brewing device with easy rejection of a capsule according to a first embodiment of the present invention;
Fig. 2 is a partial exploded view of the device according to the first embodiment of the present invention;
Fig. 3 is a sectional view of the device according to the first embodiment of the present invention (when the capsule is loaded);
Fig. 4 is a sectional view of Fig. 3 in A-A direction;
Fig. 5 is a sectional view the device according to the first embodiment of the present invention (when the second frame moves forward to the circular edge to exactly come into contact with the rear end face of the stopping portion);
Fig. 6 is a sectional view of the device according to the first embodiment of the present invention (when the first frame and the second frame are completed closed);
Fig. 7 is a sectional view of the device according to the first embodiment of the present invention (when the second frame moves backward to the circular edge to exactly come into contact with the front end face of the stopping portion);
Fig. 8 is a sectional view of the device according to the first embodiment of the present invention (when the first frame and the second frame are completed opened for capsule dropping);
Fig. 9 is a perspective view of a stopping capsule plate according to the first embodiment of the present invention; and
Fig. 10 is a perspective view of a housing according to the first embodiment of the present invention.

### Detailed Description of the Preferred Embodiment

To enable a further understanding of the present invention content of the invention herein, refer to the detailed description of the invention and the accompanying drawings below:

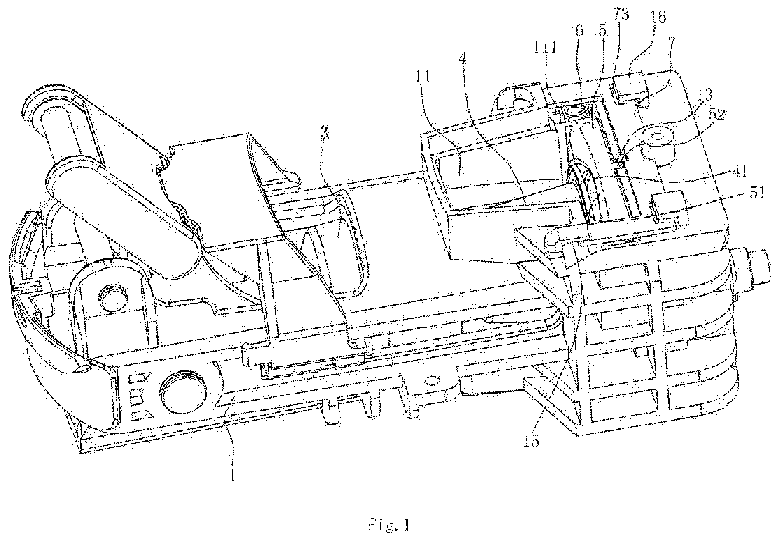

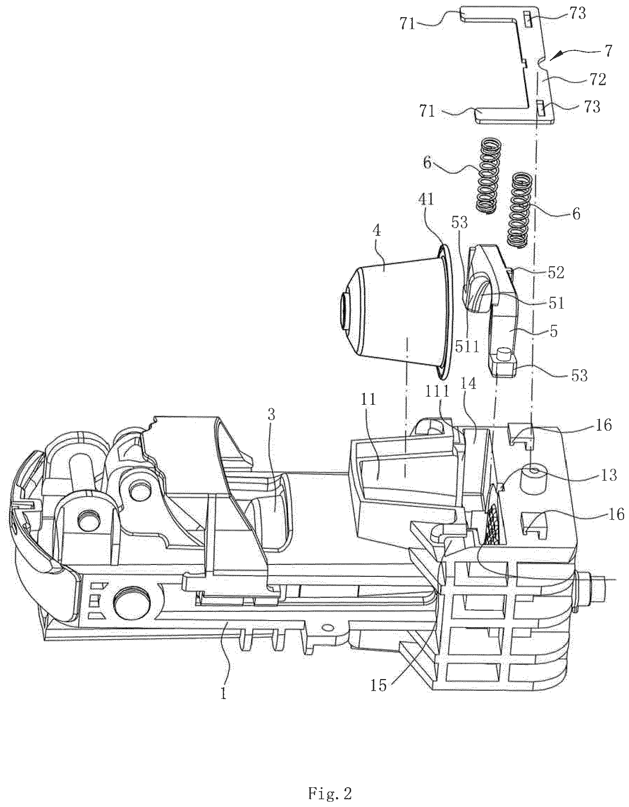

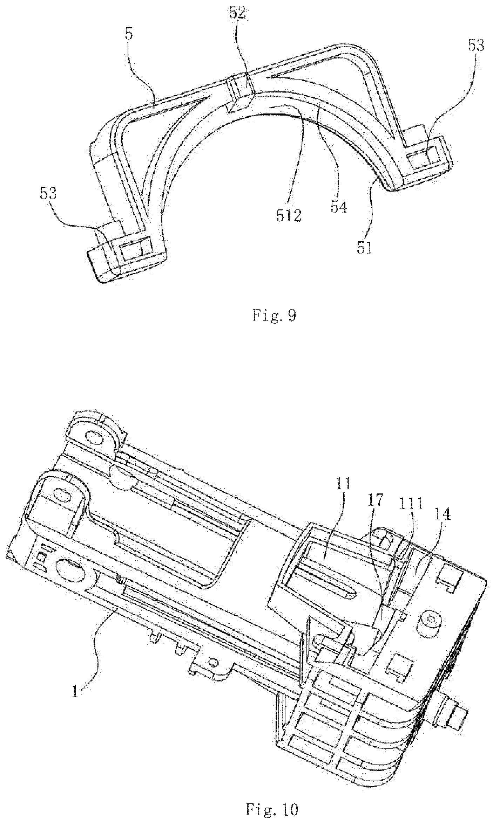

Fig. 1 - Fig. 10 show a preferred first embodiment of a beverage brewing device with easy rejection of a capsule of the present invention.

The beverage brewing device with easy rejection of a capsule comprises:
a housing 1 having a loading port 11, a dropping port 12 and a holding slot 111 for receiving a circular edge of the capsule 4, the holding slot 111 is located at the front of the loading port 11 and communicated with the loading port 11;
a first frame 2 positioned inside a front portion of the housing 1 and being a plate having a liquid outlet passage;
a second frame 3 disposed inside a back portion of the housing 1 and being movable forward and backward relative to the first frame 2, the second frame 3 having a concave chamber 31 for holding a capsule 4 with a circular edge 41 disposed at a front portion of the capsule 4; a liquid inlet passage, which is communicated with the concave chamber 31, is provided on the second frame 3 for brewing the capsule, and a piercer is provided inside the concave chamber 31; in addition, the second frame 3 is generally driven by a handle driving structure or a hydraulic driving structure to move relative to the first frame 2, and this driving structure is a conventional structure which will not be repeated herein;
a holding mechanism, for receiving and holding the capsule 4 after the capsule 4 inserted between the first frame 2 and the second frame 3; in this embodiment, the holding mechanism is a curved surface 17 which is provided on left and right inner walls of the housing 1 for supporting the circular edge 41 of the capsule and located at the lower portion of the holding slot 111;
a stopping capsule plate 5, which is generally U-shaped, positioned inside the housing 1 and capable of being movable upward and downward, a guiding block 52 protruding forward is provided in the middle of the upper portion of the front end face 512 of the stopping capsule plate 5, and a guiding notch 13 matching with the guiding block 52, is formed on the upper portion of the housing 1, and the guiding block 52 is located inside the guiding notch 13 and can move upward and downward.; a stopping portion 51, extending backward to the upper and the rear of a rear surface of the first frame 2, and a spacing X for receiving the circular edge 41 of the capsule 4, is formed between the stopping portion 51 and the rear surface of the first frame 2; the stopping portion 51 of the stopping capsule plate 5 has a certain width and is arc-shaped, so as to increase the contact area between the front end face 512 of the stopping portion 51 and the circular edge 41 of the capsule 4; a rear end face of 511 the stopping portion 51 is a guiding slope inclined downward from rear to front; and an arc-shaped top face 54, which can move downward under the action of the elastic mechanism to come into contact with the circular edge 41 of the capsule 4 to force the capsule 4 to move downward, is provided at the upper portion of stopping capsule plate 5 located in the front of the stopping portion 51; and
an elastic mechanism, acting on the stopping capsule plate 5 and keeping the stopping capsule plate 5 in a tendency of moving downward; the elastic mechanism comprises two springs 6, two supporting portions 53, two guiding grooves 14 for receiving each supporting portion 53, a cover plate 7; each supporting portion 53 protruding outward is respectively provided on the left and right sides of the lower portion of the stopping capsule plate 5, and can move upward and downward relative to each guiding groove 14; each guiding groove 14 is respectively formed on the left and right sides of the housing 1; the cover plate 7 is disposed on the upper portion of the housing 1 and covers the top of the two guiding grooves 14; and each spring 6 is disposed inside the corresponding guiding groove 14, each of two ends of the spring 6 resists against the cover plate 7 and the corresponding supporting portion 53.

The cover plate 7 is U-shaped and has two vertical portions 71 and a horizontal portion 72, each vertical portion 71 covers the top of each guiding groove 14; two slots 15 and two barb portions 16 protruding upward are provided on the left and right sides of the top of the housing 1; the horizontal portion 72 of the cover plate 7 has two jacks 73 for two barb portions 16 to insert into, and each vertical portion 71 is inserted into the slot 15.

In the process of the second frame 3 moving forward, the second frame 3 can drive the capsule 4 to release from the holding mechanism and to move forward along with the second frame 3; in addition, the circular edge 41 of the capsule 4 can be resisted against a rear end face 511 of the stopping portion 51 to force the stopping capsule plate 5 to move forward overcoming the elastic mechanism.

When the first frame 2 and the second frame 3 are closed with each other, the circular edge 41 of the capsule 4 enters into the spacing X.

In the process of the second frame 3 moving backward, the circular edge 41 of the capsule 4 is stopped by a front end face 512 of the stopping portion 51 and finally drops under the action of gravity.

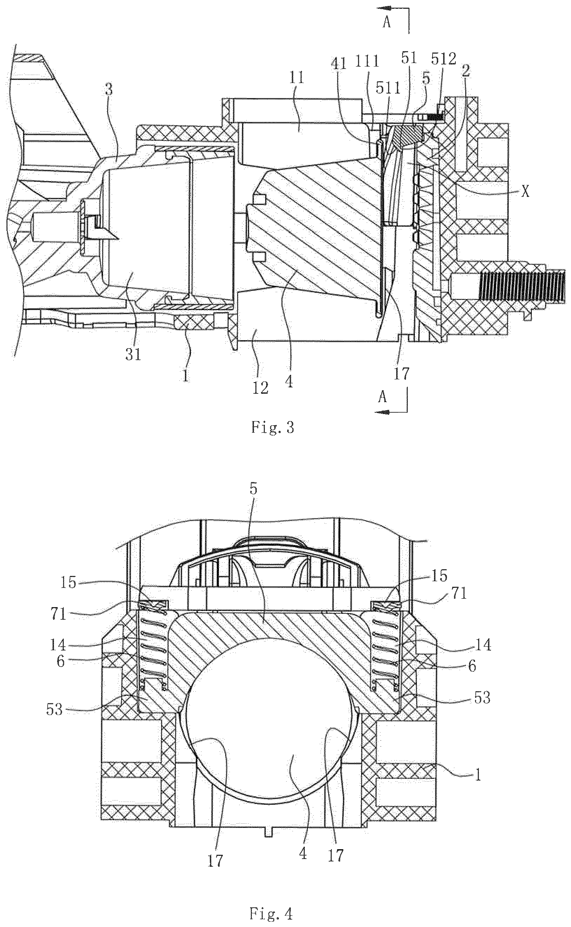

The operating principle and process of the present invention are as follows:
Loading of capsule: As shown in Fig. 3 and Fig. 4, the capsule 4, which is held by the curved surface 17 and supported by the rear wall of the holding slot 111, is loaded from the loading port 11 and held between the first frame 2 and the second frame 3, and the circular edge 41 of the capsule 4 is located at the rear of the rear end face 511 of the stopping portion 51 of the stopping capsule plate 5.

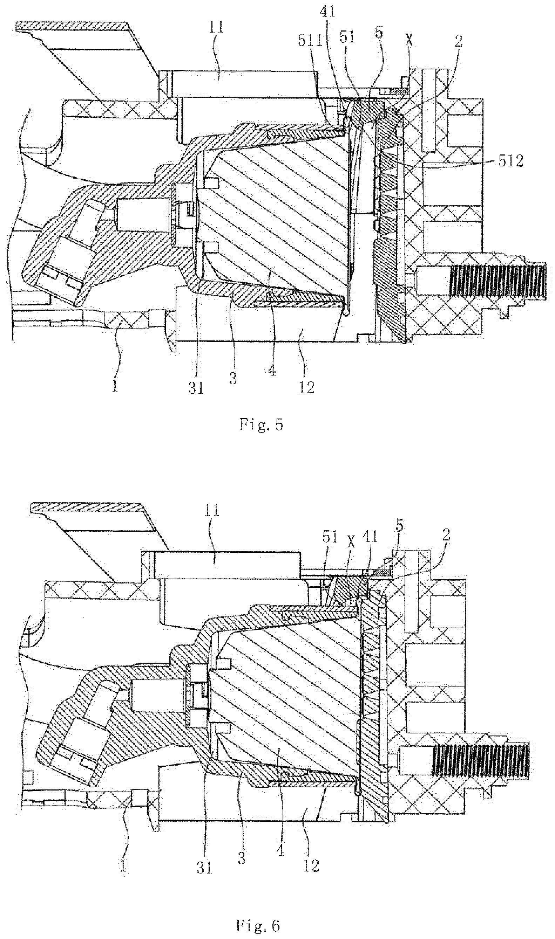

Delivery of capsule: As shown in Fig. 5, the second frame 3 is driven by the driving mechanism to move forward, and the body of the capsule 4 gradually enters into the concave chamber 31 of the second frame 3; after coming into contact with the circular edge 41 of the capsule 4, a front ring surface of the second frame 3 continues to move forward until the circular edge 41 of the capsule 4 comes into contact with the rear end face 511 of the stopping portion 51; the second frame 3 drives the capsule 4 to move forward, the circular edge 41 of the capsule 4 can be resisted against the rear end face 511 of the stopping portion 51 to force the stopping capsule plate 5 to move upward while overcoming the action of the elastic mechanism; and the second frame 3 further moves forward, the circular edge 41 of the capsule 4 enters into the spacing X, at the same time, the second frame 3 and the first frame 2 are air-tightly closed.

Extraction: As shown in Fig. 6, it is the same as that of the existing coffeemaker, which is not described any more.

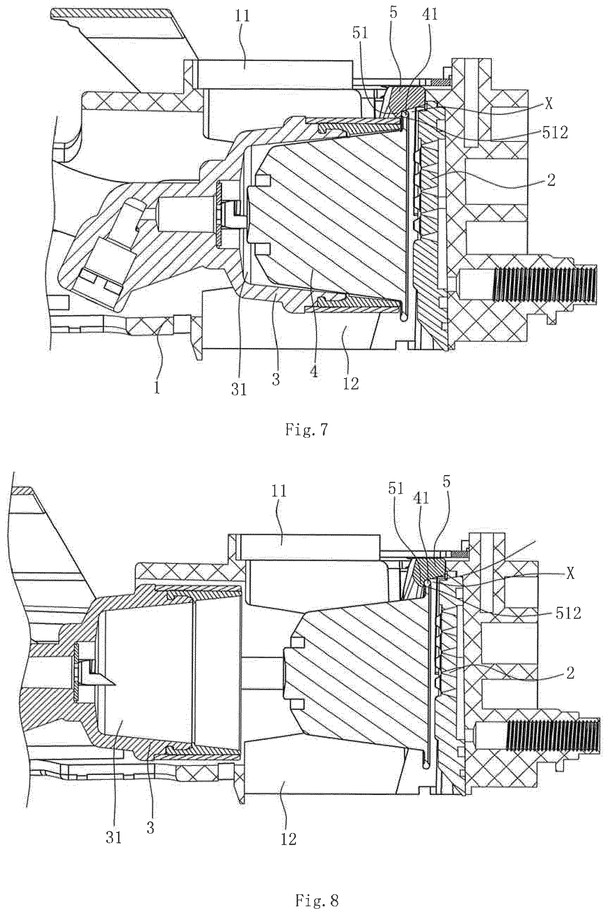

Rejection of capsule: As shown in Fig. 7 and Fig. 8, the second frame 3 is driven by the driving mechanism to move backward, the capsule 4 moves backward along with the second frame 3 at the initial stage until the circular edge 41 of the capsule 4 comes into contact with the front end face 512 of the stopping portion 51 which is a vertical face; and the second frame 3 continues to move backward, the circular edge 41 of the capsule 4 is limited by the front end face 512 of the stopping portion 51 to hold in place; and the body of the capsule 4 is gradually released from the concave chamber 31, and after at least half of the capsule 4 is released from the concave chamber 31, the capsule 4 drops due to the combined action of the gravity and a downward driving force to the capsule 4 generated by the top face 54 in the process of the stopping capsule plate 5 moving downward.

## Claims

1. A beverage brewing device with easy rejection of a capsule, comprising:
a housing (1) having a loading port (11) and a dropping port (12);
a first frame (2) positioned inside a front portion of the housing (1);
a second frame (3) disposed inside a back portion of the housing (1) and being movable forward and backward relative to the first frame (2), the second frame (3) having a concave chamber (31) for holding a capsule (4) with a circular edge (41) disposed at a front portion of the capsule (4);
a holding mechanism, for receiving and holding the capsule (4) after the capsule (4) has been inserted between the first frame (2) and the second frame (3);
a stopping capsule plate (5) positioned inside the housing (1) and capable of being moved upward and downward, having a stopping portion (51) extending backward to the upper and the rear of a rear surface of the first frame (2), and a spacing (X) for receiving the circular edge (41) of the capsule (4), being formed between the stopping portion (51) and the rear surface of the first frame (2); and
an elastic mechanism, acting on the stopping capsule plate (5) and keeping the stopping capsule plate (5) in a tendency of moving downward;
the device being arranged so that:
in the process of the second frame (3) moving forward, the second frame (3) can drive the capsule (4) to release from the holding mechanism and to move forward along with the second frame (3);
the circular edge (41) of the capsule (4) can be resisted against a rear end face (511) of the stopping portion (51) to force the stopping capsule plate (5) to move forward overcoming the elastic mechanism;
when the first frame (2) and the second frame (3) are closed with each other, the circular edge (41) of the capsule (4) enters into the spacing (X); and
in the process of the second frame (3) moving backward, the circular edge (41) of the capsule (4) is stopped by a front end face (512) of the stopping portion (51) and finally drops under the action of gravity.

2. The beverage brewing device according to claim 1, in which the stopping portion (51) of the stopping capsule plate (5) has a certain width and is arc-shaped, so as to increase the contact area between the front end face (512) of the stopping portion (51) and the circular edge (41) of the capsule (4).

3. The beverage brewing device according to claim 2, in which the rear end face (511) of the stopping portion (51) is a guiding slope inclined downward from rear to front.

4. The beverage brewing device according to claim 2, in which a guiding block (52) protruding forward is provided in the middle of the upper portion of the front end face (512) of the stopping capsule plate (5), and a guiding notch (13) matching with the guiding block (52), is formed on the upper portion of the housing (1), and the guiding block (52) is located inside the guiding notch (13) and can move upward and downward.

5. The beverage brewing device according to claim 2, in which an arc-shaped top face (54), which can move downward under the action of the elastic mechanism to come into contact with the circular edge (41) of the capsule (4) to force the capsule (4) to move downward, is provided at the upper portion of stopping capsule plate (5) located in the front of the stopping portion (51).

6. The beverage brewing device according to claim 1, in which the elastic mechanism comprises two springs (6), two supporting portions (53), two guiding grooves (14) for receiving each supporting portion (53), and a cover plate (7);
and in which each supporting portion (53) protruding outward is respectively provided on the left and right sides of the lower portion of the stopping capsule plate (5), and can move upward and downward relative to each guiding groove (14); each guiding groove (14) is respectively formed on the left and right sides of the housing (1); the cover plate (7) is disposed on the upper portion of the housing (1) and covers the top of the two guiding grooves (14); and each spring (6) is disposed inside the corresponding guiding groove (14), each of two ends of the spring (6) resisting against the cover plate (7) and the corresponding supporting portion (53).

7. The beverage brewing device according to claim 6, in which the cover plate (7) is U-shaped and has two vertical portions (71) and a horizontal portion (72), each vertical portion (71) covering the top of each guiding groove (14); two slots (15) and two barb portions (16) protruding upward are provided on the left and right sides of the top of the housing (1); the horizontal portion (72) of the cover plate (7) has two jacks (73) for two barb portions (16) to insert into, and each vertical portion (71) is inserted into the slot (15).

8. The beverage brewing device according to claim 1, in which the holding mechanism is two curved surfaces (17) respectively provided on left and right inner walls of the housing (1) for supporting the circular edge (41) of the capsule (4).

## Patentansprüche

1. Getränkebrauvorrichtung mit leichter Freigabe einer Kapsel, umfassend:
ein eine Ladeöffnung (11) und eine Abwurföffnung (12) aufweisendes Gehäuse (1);
einen innerhalb eines vorderen Bereichs des Gehäuses (1) angeordneten ersten Rahmen (2);
einen innerhalb eines hinteren Bereichs des Gehäuses (1) angeordneten und nach vorne und hinten relativ zu dem ersten Rahmen (2) beweglichen zweiten Rahmen (3), wobei der zweite Rahmen (3) eine konkave Kammer (31) zum Halten einer Kapsel (4) mit einem an einem vorderen Bereich der Kapsel (4) angeordneten kreisförmigen Rand (41) aufweist;
einen Haltemechanismus zum Aufnehmen und Halten der Kapsel (4), nachdem die Kapsel (4) zwischen dem ersten Rahmen (2) und dem zweiten Rahmen (3) eingesetzt wurde;
eine innerhalb des Gehäuses (1) angeordnete und nach oben und unten bewegbare Kapselanschlagplatte (5), welche einen sich nach hinten zu der Oberseite und der Unterseite einer Rückseite des ersten Rahmens (2) erstreckenden Anschlagbereich (51) und einen zwischen dem Anschlagbereich (51) und der Rückseite des ersten Rahmens (2) gebildeten Zwischenraum (X) zum Aufnehmen des kreisförmigen Randes (41) der Kapsel (4) aufweist; und
einen elastischen Mechanismus, welcher auf die Kapselanschlagplatte (5) einwirkt und die Kapselanschlagplatte (5) in der Neigung hält, sich nach unten zu bewegen;
wobei die Vorrichtung so angeordnet ist, dass:
beim Bewegen des zweiten Rahmens (3) nach vorne, der zweite Rahmen (3) die Kapsel (4) dazu antreiben kann, sich von dem Haltemechanismus zu lösen und sich nach vorne gemeinsam mit dem zweiten Rahmen (3) zu bewegen;
wobei der kreisförmige Rand (41) der Kapsel (4) gegen eine hintere Endfläche (511) des Anschlagbereichs (51) abgestützt werden kann, um die Kapselanschlagplatte (5) dazu zu zwingen, sich, den elastischen Mechanismus überwindend, nach vorne zu bewegen,
wobei, wenn der erste Rahmen (2) und der zweite Rahmen (3) miteinander geschlossen sind, der kreisförmige Rand (41) der Kapsel (4) in den Zwischenraum (X) eintritt; und
wobei beim Bewegen des zweiten Rahmens (3) nach hinten, der kreisförmige Rand (41) der Kapsel (4) durch eine vordere Endseite (512) des Anschlagbereichs (51) gestoppt wird und schließlich unter der Wirkung der Schwerkraft fällt.

2. Getränkebrauvorrichtung nach Anspruch 1, bei der der Anschlagbereich (51) der Kapselanschlagplatte (5) eine gewisse Breite aufweist und bogenförmig ist, um so die Kontaktfläche zwischen der vorderen Endseite (512) des Anschlagbereichs (51) und dem kreisförmigen Rand (41) der Kapsel (4) zu vergrößern.

3. Getränkebrauvorrichtung nach Anspruch 2, bei der die hintere Endseite (511) des Anschlagbereichs (51) eine von hinten nach vorne nach unten geneigte Führungsschräge ist.

4. Getränkebrauvorrichtung nach Anspruch 2, bei der ein nach vorne vorstehender Führungsblock (52) in der Mitte des oberen Bereichs der vorderen Endseite (512) der Kapselanschlagplatte (5) angeordnet ist, und wobei eine zu dem Führungsblock (52) passende Führungskerbe (13) auf dem oberen Bereich des Gehäuses (1) gebildet ist, und wobei der Führungsblock (52) innerhalb der Führungskerbe (13) angeordnet ist und sich nach oben und nach unten bewegen kann.

5. Getränkebrauvorrichtung nach Anspruch 2, bei der eine bogenförmige Oberseite (54), welche sich nach unten unter der Wirkung des elastischen Mechanismus bewegen kann, um in Kontakt mit dem kreisförmigen Rand (41) der Kapsel (4) zu kommen, um die Kapsel (4) zu zwingen, sich nach unten zu bewegen, an dem an der Vorderseite des Anschlagbereichs (51) angeordneten oberen Bereich der Kapselanschlagplatte (5) angeordnet ist.

6. Getränkebrauvorrichtung nach Anspruch 1, bei der der elastische Mechanismus zwei Federn (6), zwei Stützabschnitte (53), zwei Führungsnuten (14) zum Aufnehmen jedes Stützabschnitts (53) und eine Abdeckplatte (7) umfasst;
und bei der jeder nach außen vorstehende Stützabschnitt (53) jeweils auf den linken und rechten Seiten des unteren Bereichs der Kapselanschlagplatte (5) angeordnet ist und sich nach oben und nach unten relativ zu jeder Führungsnut (14) bewegen kann; wobei jede Führungsnut (14) jeweils auf den linken und rechten Seiten des Gehäuses (1) gebildet ist; wobei die Abdeckplatte (7) auf dem oberen Bereich des Gehäuses (1) angeordnet ist und die Oberseite der zwei Führungsnuten (14) abdeckt; und wobei jede Feder (6) innerhalb der zugehörigen Führungsnut (14) angeordnet ist, wobei jede der zwei Enden der Feder (6) sich gegen die Abdeckplatte (7) und den zugehörigen Stützabschnitt (53) abstützt.

7. Getränkebrauvorrichtung nach Anspruch 6, bei der die Abdeckplatte (7) U-förmig ist und zwei vertikale Abschnitt (71) und einen horizontalen Abschnitt (72) aufweist, wobei jeder vertikale Abschnitt (71) die Oberseite jeder Führungsnut (14) abdeckt; wobei zwei Schlitze (15) und zwei nach oben vorstehende Widerhaken (16) auf den linken und rechten Seiten der Oberseite des Gehäuses (1) angeordnet sind; wobei der horizontale Abschnitt (72) der Abdeckplatte (7) zwei Buchsen (73) zum darin Einführen von zwei Widerhaken (16) aufweist, und wobei jeder vertikaler Abschnitt (71) in den Schlitz (15) eingeführt ist.

8. Getränkebrauvorrichtung nach Anspruch 1, bei der der Haltemechanismus als gekrümmte Flächen (17) ausgebildet ist, welche jeweils auf linken und rechten Innenwänden des Gehäuses (1) zum Abstützen des kreisförmigen Randes (41) der Kapsel (4) angeordnet sind.

## Revendications

1. Dispositif d'infusion de boisson à rejet facile d'une capsule, comprenant :
un boîtier (1) ayant un orifice de chargement (11) et un orifice de chute (12) ;
un premier cadre (2) positionné à l'intérieur d'une partie avant du boîtier (1) ;
un deuxième cadre (3) disposé à l'intérieur d'une partie arrière du boîtier (1) et pouvant se déplacer vers l'avant et vers l'arrière par rapport au premier cadre (2), le deuxième cadre (3) ayant une chambre concave (31) pour contenir une capsule (4) ayant un bord circulaire (41) disposé au niveau d'une partie avant de la capsule (4)
un mécanisme de retenue, pour recevoir et retenir la capsule (4) après que la capsule (4) a été insérée entre le premier cadre (2) et le deuxième cadre (3) ;
une plaque d'arrêt de capsule (5) positionnée à l'intérieur du boîtier (1) et pouvant être déplacée vers le haut et vers le bas, ayant une partie d'arrêt (51) s'étendant vers l'arrière vers le haut et l'arrière d'une surface arrière du premier cadre (2), et un espacement (X) pour recevoir le bord circulaire (41) de la capsule (4), étant formé entre la partie d'arrêt (51) et la surface arrière du premier cadre (2) ; et
un mécanisme élastique, agissant sur la plaque d'arrêt de capsule (5) et maintenant la plaque d'arrêt de capsule (5) dans une tendance au déplacement vers le bas ;
le dispositif étant agencé de sorte que :
dans le processus de déplacement du deuxième cadre (3) vers l'avant, le deuxième cadre (3) puisse amener la capsule (4) à se libérer du mécanisme de retenue et à se déplacer vers l'avant avec le deuxième cadre (3) ;
le bord circulaire (41) de la capsule (4) puisse résister à une face d'extrémité arrière (511) de la partie d'arrêt (51) pour forcer la plaque d'arrêt de capsule (5) à se déplacer vers l'avant en surmontant le mécanisme élastique ;
lorsque le premier cadre (2) et le deuxième cadre (3) sont fermés l'un avec l'autre, le bord circulaire (41) de la capsule (4) entre dans l'espacement (X) ; et
dans le processus de déplacement du deuxième cadre (3) vers l'arrière, le bord circulaire (41) de la capsule (4) soit arrêté par une face d'extrémité avant (512) de la partie d'arrêt (51) et tombe finalement sous l'effet de la gravité.

2. Dispositif d'infusion de boisson selon la revendication 1, dans lequel la partie d'arrêt (51) de la plaque d'arrêt de capsule (5) a une certaine largeur et est en forme d'arc, de manière à augmenter la surface de contact entre la face d'extrémité avant (512) de la partie d'arrêt (51) et le bord circulaire (41) de la capsule (4).

3. Dispositif d'infusion de boisson selon la revendication 2, dans lequel la face d'extrémité arrière (511) de la partie d'arrêt (51) est une pente de guidage inclinée vers le bas de l'arrière vers l'avant.

4. Dispositif d'infusion de boisson selon la revendication 2, dans lequel un bloc de guidage (52) faisant saillie vers l'avant est prévu au milieu de la partie supérieure de la face d'extrémité avant (512) de la plaque d'arrêt de capsule (5), et une encoche de guidage (13) correspondant au bloc de guidage (52), est formée sur la partie supérieure du boîtier (1), et le bloc de guidage (52) est situé à l'intérieur de l'encoche de guidage (13) et peut se déplacer vers le haut et le bas.

5. Dispositif d'infusion de boisson selon la revendication 2, dans lequel une face de dessus en forme d'arc (54), pouvant se déplacer vers le bas sous l'effet du mécanisme élastique pour venir en contact avec le bord circulaire (41) de la capsule (4) pour forcer la capsule (4) à se déplacer vers le bas, est prévue au niveau de la partie supérieure de la plaque d'arrêt de capsule (5) située à l'avant de la partie d'arrêt (51).

6. Dispositif d'infusion de boisson selon la revendication 1, dans lequel le mécanisme élastique comprend deux ressorts (6), deux parties de support (53), deux rainures de guidage (14) pour recevoir chaque partie de support (53) et une plaque de recouvrement (7) ;
et où chaque partie de support (53) faisant saillie vers l'extérieur est prévue respectivement sur les côtés gauche et droit de la partie inférieure de la plaque d'arrêt de capsule (5), et peut se déplacer vers le haut et vers le bas par rapport à chaque rainure de guidage (14) ; chaque rainure de guidage (14) est formée respectivement sur les côtés gauche et droit du boîtier (1) ; la plaque de recouvrement (7) est disposée sur la partie supérieure du boîtier (1) et recouvre le dessus des deux rainures de guidage (14) ; et chaque ressort (6) est disposé à l'intérieur de la rainure de guidage correspondante (14), chacune des deux extrémités du ressort (6) résistant à la plaque de recouvrement (7) et à la partie de support correspondante (53).

7. Dispositif d'infusion de boisson selon la revendication 6, dans lequel la plaque de recouvrement (7) est en forme de U et présente deux parties verticales (71) et une partie horizontale (72), chaque partie verticale (71) recouvrant le dessus de chaque rainure de guidage (14) ; deux fentes (15) et deux parties ardillon (16) faisant saillie vers le haut sont prévues sur les côtés gauche et droit du dessus du boîtier (1) ; la partie horizontale (72) de la plaque de recouvrement (7) présente deux éléments en forme de prise (73) pour l'insertion des deux parties ardillon (16) dans ceux-ci, et chaque partie verticale (71) est insérée dans la fente (15).

8. Dispositif d'infusion de boisson selon la revendication 1, dans lequel le mécanisme de retenue représente deux surfaces incurvées (17) prévues respectivement sur des parois internes gauche et droite du boîtier (1) pour supporter le bord circulaire (41) de la capsule (4).
